# EUROPEAN PATENT APPLICATION

(11) **EP 4 156 779 A1**
(43) Date of publication of application: **29.03.2023**
(21) Application number: 21832439.0
(22) Date of filing: 11.06.2021
(51) Int. Cl.: H04W 36/00

(54) **CELL SELECTION METHOD AND APPARATUS**

(30) Priority: 30.06.2020 CN 202010614739
(71) Applicant: Huawei Technologies Co., Ltd., Longgang Shenzhen, Guangdong 518129 (CN)
(72) Inventor: SUN, Fei, Shenzhen, Guangdong 518129 (CN); LUO, Haiyan, Shenzhen, Guangdong 518129 (CN)
(74) Representative: Gill Jennings & Every LLP
(86) International application number: PCT/CN2021/099794
(87) International publication number: WO 2022/001636

(57) **Abstract**

This application provides a cell selection method and an apparatus, to improve user experience. The method includes: A first terminal device determines a target network slice. The first terminal device determines a first public land mobile network PLMN based on the target network slice. The first terminal device determines a first cell based on the first PLMN and the target network slice, where received signal power of the first cell is greater than a first threshold.

## Description

This application claims priority to Chinese Patent Application No. 202010614739.7, filed with the China National Intellectual Property Administration on June 30, 2020 and entitled "CELL SELECTION METHOD AND APPARATUS", which is incorporated herein by reference in its entirety.

### TECHNICAL FIELD

This application relates to the communications field, and more specifically, to a cell selection method and an apparatus.

### BACKGROUND

With development of information technologies, various new services and application scenarios continuously emerge, and requirements of these services on network functions, connection performance, security, and the like are greatly different. If a single network is used to carry these services, it is difficult to meet requirements on high bandwidth, low latency, and high reliability. In addition, building a new network for each type of service brings huge costs. Therefore, 5G needs to be flexible and scalable to meet different service requirements. To address this issue, 5G uses an end-to-end network slice (network slice) to provide a customized network service for a user. Through flexible allocation of network resources and on-demand networking, a plurality of isolated logical subnets with different characteristics are virtualized on a same physical infrastructure to provide specific services for users.

In an existing protocol, related information of a network slice is not referenced for public land mobile network (Public Land Mobile Network, PLMN) selection and cell selection. In this way, a terminal device may access an incorrect cell, and a target network slice of the terminal device is not allowed. Consequently, user experience is affected.

### SUMMARY

This application provides a cell selection method and an apparatus, to prevent a terminal device from selecting a cell that does not allow a target network slice of the terminal device, so that user experience is improved.

According to a first aspect, a cell selection method is provided, and includes: A first terminal device determines a target network slice. The first terminal device determines a first public land mobile network PLMN based on the target network slice. The first terminal device determines a first cell based on the first PLMN and the target network slice, where received signal power of the first cell is greater than a first threshold.

Based on the foregoing technical solution, the first terminal device determines the target network slice based on allowed or supported network slices that are of different radio access network devices or different cells controlled by a radio access network device and that are sent by a first core network device, determines the first PLMN based on information about the target network slice, and then determines, based on the first PLMN and the target network slice, the cell to request to access. This can avoid a case in which the cell that the first terminal device requests to access does not allow the target network slice of the first terminal device, so that user experience is improved.

In a possible implementation, that a first terminal device determines a target network slice includes: The first terminal device receives network slice information sent by a first core network device, where the network slice information includes allowed or supported network slices of different radio access network devices or different cells within a first area range. The first terminal device determines the target network slice based on the network slice information, where the target network slice is a network slice in the allowed network slices of the different radio access network devices or the different cells within the first area range.

In a possible implementation, that the first terminal device determines a first public land mobile network PLMN based on the target network slice includes: An access stratum AS of the first terminal device detects, within a fullband range, a cell whose received signal power is greater than or equal to a second threshold. The AS sends a cell identifier corresponding to the cell whose received signal power is greater than or equal to the second threshold and information about supported PLMNs to a non-access stratum NAS of the first terminal device. The NAS determines, based on the network slice information, an identifier of a radio access network device or a cell that allows the target network slice. The NAS determines, as a target cell, a cell whose corresponding cell identifier is the same as the identifier of the cell allowing the target network slice and that is in the cell whose received signal power is greater than or equal to the second threshold, or the NAS determines, as a target cell, a cell whose radio access network device identifier included in a corresponding cell identifier is the same as the identifier of the radio access network device allowing the target network slice and that is in the cell whose received signal power is greater than or equal to the second threshold. The NAS determines a PLMN with a highest priority as the first PLMN based on information about supported PLMNs of the target cell.

In a possible implementation, that the first terminal device determines a first public land mobile network PLMN based on the target network slice includes: A non-access stratum NAS of the first terminal device determines, based on the network slice information, an identifier of a radio access network device or a cell that allows the target network slice. The NAS sends, to an access stratum AS of the first terminal device, the identifier of the radio access network device or the cell that allows the target network slice. The AS detects, within a fullband range, a cell whose received signal power is greater than or equal to a second threshold. The AS determines, as a target cell, a cell whose corresponding cell identifier is the same as the identifier of the cell allowing the target network slice and that is in the cell whose received signal power is greater than or equal to the second threshold, or the AS determines, as a target cell, a cell whose radio access network device identifier included in a corresponding cell identifier is the same as the identifier of the radio access network device allowing the target network slice and that is in the cell whose received signal power is greater than or equal to the second threshold. The AS sends information about supported PLMNs of the target cell to the NAS. The NAS determines a PLMN with a highest priority as the first PLMN based on the PLMN information.

In a possible implementation, that the first terminal device determines a first public land mobile network PLMN based on the target network slice includes: An AS of the first terminal device detects, within a fullband range, a cell whose received signal power is greater than or equal to a second threshold. The AS of the first terminal device sends a cell identifier corresponding to the cell whose received signal power is greater than or equal to the second threshold, a supported frequency of the cell, and supported PLMNs of the cell to a NAS of the first terminal device. The NAS determines, based on the network slice information sent by the first core network device, an identifier of a radio access network device allowing the target network slice and a corresponding frequency. The NAS determines, as a target cell, a cell whose radio access network device identifier included in a corresponding cell identifier is the same as the identifier of the radio access network device allowing the target network slice, whose supported frequency is the same as the frequency corresponding to the radio access network device allowing the target network slice, and that is in the cell whose received signal power is greater than or equal to the second threshold. The NAS determines a PLMN with a highest priority as the first PLMN based on information about supported PLMNs of the target cell.

In a possible implementation, that the first terminal device determines a first public land mobile network PLMN based on the target network slice includes: A non-access stratum NAS of the first terminal device determines, based on the network slice information sent by the first core network device, an identifier of a radio access network device allowing the target network slice and a supported frequency of the radio access network device. The NAS sends, to an AS of the first terminal device, the identifier of the radio access network device allowing the target network slice and information about the supported frequency of the radio access network device. The AS detects, frequency by frequency based on the information about the supported frequency of the radio access network device allowing the target network slice, a cell whose received signal power is greater than or equal to a second threshold. The AS determines, as a target cell, a cell whose radio access network device identifier included in a corresponding cell identifier is the same as the identifier of the radio access network device allowing the target network slice and that is in the cell whose received signal power is greater than or equal to the second threshold. The AS sends information about supported PLMNs of the target cell to the NAS. The NAS determines a PLMN with a highest priority as the first PLMN based on the information about supported PLMNs of the target cell.

In a possible implementation, that the first terminal device determines a first cell based on the first PLMN and the target network slice includes: The AS detects, from all cells covered by the first PLMN, the cell whose received signal power is greater than or equal to the second threshold. The AS detects, from the cell whose received signal power is greater than or equal to the second threshold, a cell whose received signal power is greater than a first threshold. The AS sends, to the NAS, a cell identifier corresponding to the cell whose received signal power is greater than the first threshold. The NAS determines, based on the network slice information, the identifier of the radio access network device or the cell that allows the target network slice. The NAS determines, as the first cell, a cell whose corresponding cell identifier is the same as the identifier of the cell allowing the target network slice and that is in the cell whose received signal power is greater than the first threshold, or the NAS determines, as the first cell, a cell whose radio access network device identifier included in a corresponding cell identifier is the same as the identifier of the radio access network device allowing the target network slice and that is in the cell whose received signal power is greater than the first threshold.

In a possible implementation, that the first terminal device determines a first cell based on the first PLMN and the target network slice includes: The NAS sends, to the AS, the identifier of the radio access network device or the cell that allows the target network slice. The AS detects, in a cell that is in cells covered by the first PLMN and whose cell identifier is the same as the identifier of the cell allowing the target network slice, a cell whose received signal power is greater than a first threshold, or the AS detects, in a cell that is in cells covered by the first PLMN and whose radio access network device identifier included in a cell identifier is the same as the identifier of the radio access network device allowing the target network slice, a cell whose received signal power is greater than a first threshold. The AS sends, to the NAS, an identifier of the cell whose received signal power is greater than the first threshold. The NAS determines the first cell from the cell whose received signal power is greater than the first threshold.

In a possible implementation, that the first terminal device determines a first cell based on the first PLMN and the target network slice includes: The AS of the first terminal device detects, in the determined first PLMN, the cell whose received signal power is greater than or equal to the second threshold. The AS detects, from the cell whose received signal power is greater than or equal to the second threshold, a cell whose received signal power is greater than a first threshold. The AS sends, to the NAS of the first terminal device, a cell identifier corresponding to the cell whose received signal power is greater than the first threshold and the supported frequency of the cell. The NAS determines, based on the network slice information sent by the first core network device, the identifier of the radio access network device allowing the target network slice and the corresponding frequency. The NAS determines, as the first cell, a cell whose radio access network device identifier included in a corresponding cell identifier is the same as the identifier of the radio access network device allowing the target network slice, whose supported frequency is the same as the frequency corresponding to the radio access network device allowing the target network slice, and that is in the cell whose received signal power is greater than the first threshold.

In a possible implementation, that the first terminal device determines a first cell based on the first PLMN and the target network slice includes: The NAS of the first terminal device sends, to the AS of the first terminal device, the identifier of the radio access network device allowing the target network slice and the supported frequency of the radio access network device. The AS detects, frequency by frequency based on the information about the supported frequency of the radio access network device allowing the target network slice, a cell whose received signal power is greater than a first threshold and that is in cells covered by the first PLMN. The AS determines, as the target cell, a cell whose radio access network device identifier included in a corresponding cell identifier is the same as the identifier of the radio access network device allowing the target network slice and that is in the cell whose received signal power is greater than the first threshold, and sends an identifier of the target cell to the NAS. The NAS determines the first cell from the target cell whose received signal power is greater than the first threshold.

In a possible implementation, the first area range is an area range of at least one tracking area TA or an area range of at least one registration area RA.

According to a second aspect, a cell selection method is provided, and includes: A first core network device sends network slice information to a first terminal device, where the network slice information includes allowed or supported network slices of different radio access network devices or different cells within a first area range.

In a possible implementation, before the first core network device sends the network slice information to the first terminal device, the method further includes: The first core network device receives a supported network slice of a radio access network device sent by the radio access network device or supported network slices that are of different cells controlled by the radio access network device and that are sent by the radio access network device, where the radio access network device is a network device within the first area range.

In a possible implementation, the first area range is an area range of at least one tracking area TA or an area range of at least one registration area RA.

According to a third aspect, a cell selection method is provided, and includes: A first terminal device sends detection failure indication information to a radio access network device, where the detection failure indication information includes identification information of a target network slice selected by the first terminal device, to indicate that the target network slice is not supported by a network.

In a possible implementation, the radio access network device receives the detection failure indication information.

In a possible implementation, the radio access network device performs a redirection, handover, or dual connectivity operation on the first terminal device.

According to a fourth aspect, a cell selection method is provided, and includes: A first terminal device sends detection failure indication information to a first core network device, where the detection failure indication information includes identification information of a target network slice selected by the first terminal device, to indicate that the target network slice is not supported by a network.

In a possible implementation, the first core network device receives the detection failure indication information.

In a possible implementation, the first core network device performs a redirection, handover, or dual connectivity operation on the first terminal device.

According to a fifth aspect, a communication apparatus is provided, and includes: a processing unit, configured to determine a target network slice. The processing unit is further configured to determine a first public land mobile network PLMN based on the target network slice, and the processing unit is further configured to determine a first cell based on the first PLMN and the target network slice, where received signal power of the first cell is greater than a first threshold.

In a possible implementation, the apparatus further includes: a transceiver unit, configured to receive network slice information sent by a first core network device, where the network slice information includes allowed or supported network slices of different radio access network devices or different cells within a first area range. The processing unit is specifically configured to determine the target network slice based on the network slice information, where the target network slice is a network slice in the allowed network slices of the different radio access network devices or the different cells within the first area range.

In a possible implementation, the processing unit is specifically configured to: detect, within a fullband range, a cell whose received signal power is greater than or equal to a second threshold; determine a cell identifier corresponding to the cell whose received signal power is greater than or equal to the second threshold and information about supported PLMNs; determine, based on the network slice information, an identifier of a radio access network device or a cell that allows the target network slice; determine, as a target cell, a cell whose corresponding cell identifier is the same as the identifier of the cell allowing the target network slice and that is in the cell whose received signal power is greater than or equal to the second threshold, or determine, as a target cell, a cell whose radio access network device identifier included in a corresponding cell identifier is the same as the identifier of the radio access network device allowing the target network slice and that is in the cell whose received signal power is greater than or equal to the second threshold; and determine a PLMN with a highest priority as the first PLMN based on information about supported PLMNs of the target cell.

In a possible implementation, the processing unit is specifically configured to: determine, based on the network slice information, an identifier of a radio access network device or a cell that allows the target network slice; detect, within a fullband range, a cell whose received signal power is greater than or equal to a second threshold; determine, as a target cell, a cell whose corresponding cell identifier is the same as the identifier of the cell allowing the target network slice and that is in the cell whose received signal power is greater than or equal to the second threshold, or determine, as a target cell, a cell whose radio access network device identifier included in a corresponding cell identifier is the same as the identifier of the radio access network device allowing the target network slice and that is in the cell whose received signal power is greater than or equal to the second threshold; determine information about supported PLMNs of the target cell; and determine a PLMN with a highest priority as the first PLMN based on the PLMN information.

In a possible implementation, the processing unit is specifically configured to: detect, from all cells covered by the first PLMN, the cell whose received signal power is greater than or equal to the second threshold; detect, from the cell whose received signal power is greater than or equal to the second threshold, a cell whose received signal power is greater than a first threshold; determine a cell identifier corresponding to the cell whose received signal power is greater than the first threshold; determine, based on the network slice information, the identifier of the radio access network device or the cell that allows the target network slice; and determine, as the first cell, a cell whose corresponding cell identifier is the same as the identifier of the cell allowing the target network slice and that is in the cell whose received signal power is greater than the first threshold, or determine, as the first cell, a cell whose radio access network device identifier included in a corresponding cell identifier is the same as the identifier of the radio access network device allowing the target network slice and that is in the cell whose received signal power is greater than the first threshold.

In a possible implementation, the processing unit is specifically configured to: determine, based on the network slice information, the identifier of the radio access network device or the cell that allows the target network slice; detect, in a cell that is in cells covered by the first PLMN and whose cell identifier is the same as the identifier of the cell allowing the target network slice, a cell whose received signal power is greater than a first threshold, or detect, in a cell that is in cells covered by the first PLMN and whose radio access network device identifier included in a cell identifier is the same as the identifier of the radio access network device allowing the target network slice, a cell whose received signal power is greater than a first threshold; and determine the first cell from the cell whose received signal power is greater than the first threshold.

In a possible implementation, the first area range is an area range of at least one tracking area TA or an area range of at least one registration area RA.

According to a sixth aspect, a communication apparatus is provided, and includes: a transceiver unit, configured to send network slice information to a first terminal device, where the network slice information includes allowed or supported network slices of different radio access network devices or different cells within a first area range.

In a possible implementation, before sending the network slice information to the first terminal device, the transceiver unit is further configured to receive a supported network slice of a radio access network device sent by the radio access network device or supported network slices that are of different cells controlled by the radio access network device and that are sent by the radio access network device, where the radio access network device is a network device within the first area range.

In a possible implementation, the first area range is an area range of at least one tracking area TA or an area range of at least one registration area RA.

According to a seventh aspect, a communication device is provided, and includes a processor and a transceiver. The transceiver is configured to: receive computer code or instructions, and transmit the computer code or the instructions to the processor, and the processor runs the computer code or the instructions according to the method in any one of the first aspect or the possible implementations of the first aspect.

According to an eighth aspect, a communication device is provided, and includes a processor and a transceiver. The transceiver is configured to: receive computer code or instructions, and transmit the computer code or the instructions to the processor, and the processor runs the computer code or the instructions according to the method in any one of the second aspect or the possible implementations of the second aspect.

According to a ninth aspect, a computer-readable storage medium is provided. The computer-readable medium stores a computer program. When the computer program is run on a computer, the computer is enabled to perform the method in any one of the first aspect or the possible implementations of the first aspect.

According to a tenth aspect, a computer-readable storage medium is provided. The computer-readable medium stores a computer program. When the computer program is run on a computer, the computer is enabled to perform the method in any one of the second aspect or the possible implementations of the second aspect.

### BRIEF DESCRIPTION OF DRAWINGS

FIG. 1 is a schematic interaction diagram of a procedure in which UE accesses an incorrect RAN node for registration according to an embodiment of this application;
FIG. 2 is an interaction flowchart of a cell selection method according to an embodiment of this application;
FIG. 3 is a schematic diagram of an allowed network slice at a granularity of a radio access network device according to an embodiment of this application;
FIG. 4 is an interaction flowchart of another cell selection method according to an embodiment of this application;
FIG. 5 is an interaction flowchart of another cell selection method according to an embodiment of this application;
FIG. 6 is a schematic block diagram of a communication apparatus according to an embodiment of this application;
FIG. 7 is a schematic block diagram of another communication apparatus according to an embodiment of this application; and
FIG. 8 is a schematic block diagram of a communication device according to an embodiment of this application.

### DESCRIPTION OF EMBODIMENTS

The following describes technical solutions of this application with reference to accompanying drawings.

Embodiments of this application may be applied to various communication systems, for example, a wireless local area network (Wireless Local Area Network, WLAN) system, a narrowband internet of things (Narrowband Internet of Things, NB-IoT) system, a global system for mobile communications, an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronization Code Division Multiple Access, TD-SCDMA) system, a long term evolution (Long Term Evolution, LTE) system, satellite communication, a 5th generation (5G) system, and a new communication system emerging in the future.

A terminal device in embodiments of this application may include various handheld devices, vehicle-mounted devices, wearable devices, or computing devices that have a wireless communication function, or other processing devices connected to a wireless modem. The terminal may be a mobile station (Mobile Station, MS), a subscriber unit (subscriber unit), user equipment (user equipment, UE), a cellular phone (cellular phone), a smartphone (smartphone), a wireless data card, a personal digital assistant (Personal Digital Assistant, PDA) computer, a tablet computer, a wireless modem (modem), a handheld (handheld) device, a laptop computer (laptop computer), a machine type communication (Machine Type Communication, MTC) terminal, or the like.

With development of mobile communication technologies, various new services and application scenarios continuously emerge, and requirements of these services on network functions, connection performance, security, and the like are greatly different. If a single network is used to carry these services, it is difficult to meet requirements on high bandwidth, low latency, and high reliability. In addition, building a new network for each type of service brings huge costs. Therefore, 5G needs to be flexible and scalable to meet different service requirements. To address this issue, 5G uses an end-to-end network slice (network slice) to provide a customized network service for a user. Through flexible allocation of network resources and on-demand networking, a plurality of isolated logical subnets with different characteristics are virtualized on a same physical infrastructure to provide specific services for users.

Different logical subnets are identified and distinguished by single network slice selection assistance information (single network slice selection assistance information, S-NSSAI). NSSAI is a set of the S-NSSAI. Different carrier frequencies (cells) support different network slices. For example, 2.6 GHz supports an enhanced mobile broadband (enhanced mobile broadband, eMBB) service, and 4.9 GHz supports an ultra-reliable low-latency communication (ultra-reliable low-latency communication, URLLC) service.

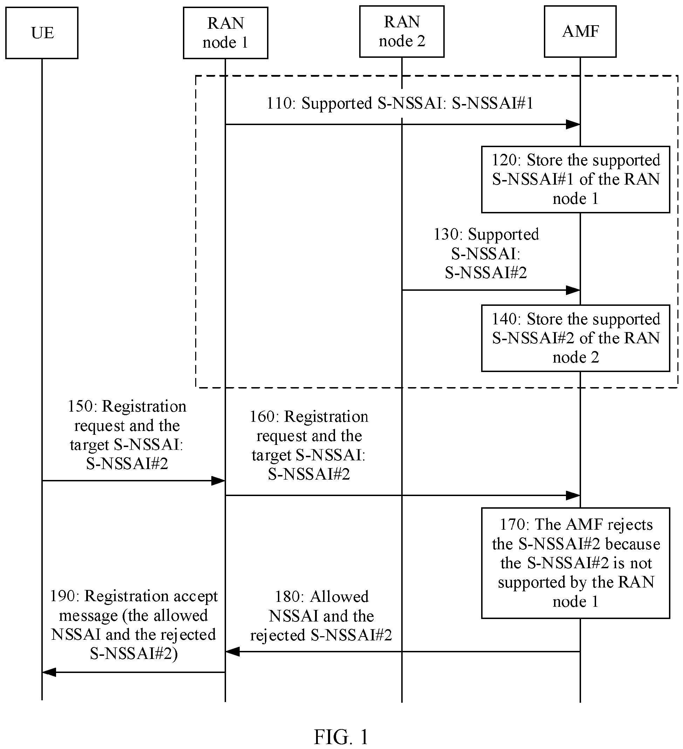

When selecting a radio access network (radio access network, RAN) node to perform a registration procedure, UE may not learn of currently supported network slices of the RAN node. The RAN node selected by the UE may not support a network slice requested by the UE, that is, a target network slice is not allowed by a network. Consequently, the UE accesses the incorrect RAN node for registration, subsequent service initiation of the UE is affected, and service experience of the UE is affected. FIG. 1 is a schematic interaction diagram of a procedure in which UE accesses an incorrect RAN node for registration. A detailed process is as follows.

110: Supported S-NSSAI of a RAN node 1 is S-NSSAI#1, and the RAN node 1 reports the supported S-NSSAI#1 of the RAN node 1 to an access and mobility management function (access and mobility management function, AMF).

120: The AMF stores the supported S-NSSAI#1 of the RAN node 1.

130: Supported S-NSSAI of a RAN node 2 is S-NSSAI#2, and the RAN node 2 reports the supported S-NSSAI#2 of the RAN node 2 to the AMF.

140: The AMF stores the supported S-NSSAI#2 of the RAN node 2.

150: The UE initiates a registration request to the AMF via the RAN node 1, where a registration request message carries the S-NSSAI#2 as a target network slice requested by the UE.

160: The RAN node 1 forwards the registration request of the UE to the AMF.

170: The AMF rejects the S-NSSAI#2 because the S-NSSAI#2 is not supported by the RAN node 1.

180: The AMF sends allowed NSSAI and the rejected S-NSSAI#2 to the RAN node 1.

190: The RAN node 1 replies to the UE with a registration accept message, and forwards, to the UE, the allowed NSSAI and the rejected S-NSSAI#2 that are sent by the AMF.

In the foregoing process, the RAN node 1 selected by the UE does not support the S-NSSAI#2, and the target network slice S-NSSAI#2 of the UE is not allowed by a network. In this case, the UE accesses the incorrect RAN node for registration, and consequently subsequent service initiation of the UE is affected.

In an existing protocol, related information of a network slice is not referenced for public land mobile network PLMN selection and cell selection. In this way, UE may access an incorrect cell, and a target network slice of the UE is not allowed. Therefore, it is critical for the UE to obtain information about an allowed network slice of a current network.

To facilitate understanding of embodiments of this application, PLMN selection and cell selection processes in a conventional technology are briefly described. The PLMN selection processes include two cases. One is a case in which there is no prior information, and the other is a case in which there is prior information. The PLMN selection process in which there is no prior information is different from the PLMN selection process in which there is the prior information. It should be understood that the prior information in the conventional technology is PLMN information prestored by the UE, in other words, the prior information specifies several PLMNs. When there is the prior information, a non-access stratum (non-access stratum, NAS) of the UE indicates an access stratum (access stratum, AS) of the UE to detect a given PLMN, and determines whether there is a cell that can be camped on in the PLMN. If there is no cell that can be camped on in the PLMN, detection of a next PLMN is performed.
(1) The PLMN selection process in which there is no prior information includes the following steps.
   Step 1: Power on UE.
   Step 2: The UE determines that there is no PLMN prior information in a universal subscriber identity module (Universal Subscriber Identity Module, USIM) card, in other words, there is no stored information about a PLMN used last time.
   Step 3: An AS of the UE automatically detects, within a fullband range or based on an indication of a non-access stratum NAS, a cell that meets a condition, namely, a cell with strong signal strength, for example, a cell whose primary common control physical channel (primary common control physical channel, PCCPCH) received signal code power (received signal code power, RSCP) or reference signal received power (reference signal received power, RSRP) is greater than or equal to -84 dBm. The RSCP and RSRP are collectively referred to as received signal power.
   Step 4: The AS reads identifiers of supported PLMNs of the cell with strong signal strength.
   Step 5: The AS reports the identifiers of the supported PLMNs of the cell with strong signal strength to the non-access stratum (non-access stratum, NAS).
   Step 6: The NAS determines a PLMN from the plurality of supported PLMNs of the cell with strong signal strength. It should be understood that, after determining the PLMN, the NAS may further send stop indication information to the AS, so that the AS stops detection.
(2) The PLMN selection process in which there is the prior information includes the following steps.
   Step 1: Power on the UE.
   Step 2: The UE determines that there is the PLMN prior information in a USIM card, in other words, there is stored information about a PLMN used last time.
   Step 3: The NAS of the UE indicates, based on the prior information, the AS to detect a cell that meets a condition, namely, a cell with strong signal strength, for example, a cell whose PCCPCH RSCP or RSRP is greater than or equal to -84 dBm.
   Step 4: If a cell that meets the prior information and has strong signal strength is detected by the AS, the AS reads identifiers of supported PLMNs of the cell.
   Step 5: The AS reports, to the NAS, the identifiers of the supported PLMNs of the cell that meets the prior information and has the strong signal strength.
   Step 6: The NAS determines a PLMN from the plurality of supported PLMNs of the cell that meets the prior information and has the strong signal strength. It should be understood that, after determining the PLMN, the NAS may further send stop indication information to the AS, so that the AS stops detection.

After PLMN selection ends, the NAS indicates, based on the selected PLMN, the AS to select a cell from cells covered by the PLMN. The cell selection processes also include two cases. One is a case in which there is no prior information, and the other is a case in which there is prior information. In the conventional technology, the prior information is prestored cell parameter information, for example, carrier frequency information, previously received measurement control information, or parameter information of a previously detected cell. When there is the prior information, the NAS indicates the AS to detect, based on a cell parameter, a cell that meets a condition. If there is no prior information, the UE needs to detect, within a fullband range, a cell that meets a condition.

Currently, network slice information that can be obtained by the UE is at a tracking area (tracking area, TA) or registration area (registration area, RA) granularity, and one RA may include several TAs. In other words, the UE obtains a set of allowed network slices of all radio access network devices in one TA or RA range.

An embodiment of this application provides a cell selection method 200, to avoid a case in which a cell selected by a terminal device does not allow a target network slice of the terminal device, so that user experience is improved.

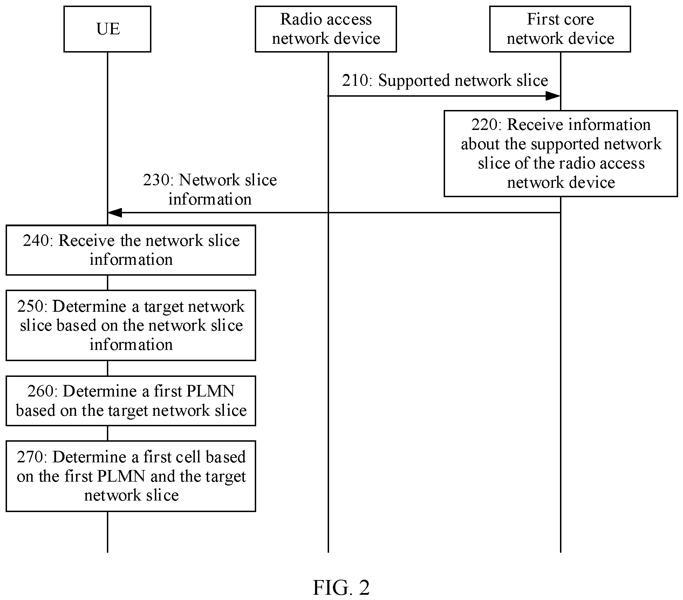

FIG. 2 is an interaction flowchart of a cell selection method 200 according to an embodiment of this application.

210: A radio access network device sends, to a first core network device, a supported network slice of the radio access network device or supported network slices of different cells controlled by the radio access network device. The radio access network device is a network device within a first area range. To be specific, the radio access network device may be a network device within an area range of at least one TA, or may be a network device within an area range of at least one RA. There may be one or more radio access network devices within the first area range. In this case, a plurality of radio access network devices may send, to the first core network device, supported network slices of the plurality of radio access network devices or information about supported network slices of different cells controlled by each of the plurality of radio access network devices. The radio access network device may be a base station or another radio access network device. The first core network device may be an AMF, or may be another core network device.

If the radio access network device sends the supported network slice of the radio access network device, it indicates that all different cells controlled by the radio access network device support the network slice. For example, if the cells controlled by the radio access network device include a cell 1, a cell 2, and a cell 3, and the supported network slice of the radio access network device is S-NSSAI#1, the cell 1, the cell 2, and the cell 3 all support the network slice S-NSSAI#1. If the radio access network device sends the supported network slices of the different cells controlled by the radio access network device, supported network slices of the cells may be different, and each cell has a supported network slice of the cell.

Optionally, the radio access network device may send, to the first core network device, the supported network slice of the radio access network device or the supported network slices of the different cells controlled by the radio access network device.

220: The first core network device receives the supported network slice of the radio access network device sent by the radio access network device or the supported network slices that are of the different cells controlled by the radio access network device and that are sent by the radio access network device.

230: The first core network device sends network slice information to a first terminal device, where the network slice information includes allowed or supported network slices of different radio access network devices or different cells within the first area range. The network slice information may be sent to the first terminal device when the first core network device replies to a registration request after the first terminal device initiates the registration request, or may be carried in another data packet. Information about an allowed network slice indicates a network slice that can be used by the first terminal device within the current first area range. Information about a supported network slice indicates the supported network slices of the different radio access network devices or the different cells within the current first area range. It should be understood that an allowed network slice of a cell is an intersection set between supported network slices of the cell and network slices subscribed to by the terminal device. If the first core network device sends, to the first terminal device, the supported network slices of the different radio access network devices or the different cells within the first area range, the first core network device further sends, to the first terminal device, a set of allowed network slices of all radio access network devices or cells within the first area range.

Based on the technical solutions in embodiments of this application, the first core network device provides the information about the allowed network slice at a smaller granularity of a radio access network device or a cell.

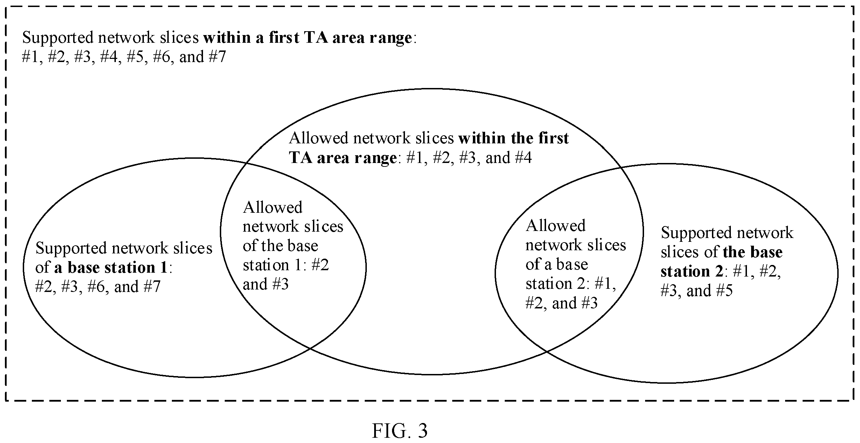

For example, the network slice information sent by the first core network device to the first terminal device indicates allowed network slices of different base stations within a first TA area range. FIG. 3 is a schematic diagram of an allowed network slice at a granularity of a radio access network device according to an embodiment of this application. It is assumed that a supported network slice set NSSAI within the first TArange includes S-NSSAI#1, #2, #3, #4, #5, #6 and #7, and network slices that a network allows the first terminal device to use are the S-NSSAI #1, #2, #3, and #4. It is assumed that supported NSSAI of a base station 1 includes the S-NSSAI #2, #3, #6, and #7, and supported NSSAI of a base station 2 includes the S-NSSAI #1, #2, #3, and #5. In this case, allowed network slices of the base station 1 are the S-NSSAI#2 and #3, and allowed network slices of the base station 2 are the S-NSSAI#1, #2, and #3. That is, an allowed network slice of a radio access network device is an intersection set of allowed network slices within the first TA range and supported network slices of the radio access network device.

Optionally, the network slice information sent by the first core network device to the first terminal device may be information about allowed network slices of different radio access network devices within the first area range, or may be information about supported network slices of different radio access network devices within the first area range. When the first core network device sends the supported network slices of the radio access network devices within the first area range, the first terminal device may determine the allowed network slices of the radio access network devices based on information about an allowed network slice within the first area range. Similarly, the network slice information sent by the first core network device to the first terminal device may indicate allowed network slices of different cells within the first area range, or may be supported network slices of different cells within the first area range. When the first core network device sends the supported network slices of the cells within the first area range, the first terminal device may determine the allowed network slices of the cells based on information about an allowed network slice within the first area range.

Optionally, the network slice information sent by the first core network device to the first terminal device may include priority information of the allowed or supported network slices.

240: The first terminal device receives the network slice information sent by the first core network device.

250: The first terminal device determines a target network slice based on the network slice information sent by the first core network device. The target network slice is determined from the allowed network slices of the different radio access network devices or the different cells within the first area range. In other words, the target network slice is a network slice in the allowed network slices of the different radio access network devices or the different cells within the first area range.

Optionally, the target network slice may be determined by the first terminal device based on the priority information that is of the allowed network slices and that is provided by the first core network device. For example, the first terminal device may determine a network slice with a highest priority as the target network slice. Optionally, the target network slice may be determined by the first terminal device based on a historical network slice usage status. Optionally, the target network slice may alternatively be a network slice currently to be initiated by the first terminal device. This is not limited in embodiments of this application.

260: The first terminal device determines a first PLMN based on the target network slice. The first PLMN is a PLMN that the first terminal device requests to access.

The first terminal device uses information about the allowed network slices of the different radio access network devices or the different cells as prior information, to perform PLMN selection. The specific implementation mode may include:

### Implementation 1:

Step 1: An AS of the first terminal device detects, within a fullband range, a cell whose received signal power is greater than or equal to a second threshold, where a second preset condition may be that PCCPCH RSCP or RSRP is greater than or equal to -84 dBm. In other words, the AS of the first terminal device detects a cell with strong signal strength within the fullband range.

Step 2: The AS of the first terminal device sends a cell identifier corresponding to the cell whose received signal power is greater than or equal to the second threshold and supported PLMNs to a NAS of the first terminal device.

Step 3: The NAS determines, based on the network slice information sent by the first core network device, an identifier of a radio access network device or a cell that allows the target network slice. If the network slice information sent by the first core network device includes only the allowed network slices of the different radio access network devices within the first area range, the NAS can determine only the identifier of the radio access network device allowing the target network slice. If the network slice information sent by the first core network device includes the allowed network slices of the different cells within the first area range, the NAS can determine the identifier of the cell allowing the target network slice.

Step 4: The NAS determines, as a target cell, a cell whose corresponding cell identifier is the same as the identifier of the cell allowing the target network slice and that is in the cell whose received signal power is greater than or equal to the second threshold.

Optionally, if the network slice information sent by the first core network device includes only the allowed network slices of the different radio access network devices within the first area range, the NAS may determine, as the target cell, a cell whose radio access network device identifier included in a corresponding cell identifier is the same as the identifier of the radio access network device allowing the target network slice and that is in the cell whose received signal power is greater than or equal to the second threshold. Specifically, a length of a cell identifier is longer than a length of an identifier of a radio access network device, and the identifier of the radio access network device that controls a cell may be determined based on first several bits of the cell identifier. It should be understood that there may be one or more target cells.

Step 5: The NAS determines a PLMN with a highest priority as the first PLMN based on information about supported PLMNs of the selected target cell. One target cell may support a plurality of PLMNs, and the supported PLMNs have a priority sequence. If there are a plurality of target cells, a PLMN with a highest priority among a plurality of supported PLMNs of the plurality of target cells may be determined as the first PLMN. Optionally, the NAS may alternatively determine the first PLMN based on a historical usage status, where the first PLMN may not have the highest priority among the plurality of supported PLMNs of the target cell.

It should be understood that allowed network slices of a same radio access network device or a same cell in different PLMNs may be different. Therefore, in step 5, the NAS may further screen the supported PLMNs of the target cell, obtain, through screening, PLMNs allowing the network slice, and then determine, from the PLMNs obtained through screening, a PLMN with a highest priority as the first PLMN.

### Implementation 2:

Step 1: A non-access stratum NAS of the first terminal device determines, based on the network slice information sent by the first core network device, an identifier of a radio access network device or a cell that allows the target network slice. If the network slice information sent by the first core network device includes only the allowed network slices of the different radio access network devices within the first area range, the NAS can determine only the identifier of the radio access network device allowing the target network slice. If the network slice information sent by the first core network device includes the allowed network slices of the different cells within the first area range, the NAS can determine the identifier of the cell allowing the target network slice.

Step 2: The NAS sends, to an AS, the identifier of the radio access network device or the cell that allows the target network slice.

Step 3: The AS of the first terminal device detects, within a fullband range, a cell whose received signal power is greater than or equal to a second threshold, where the second threshold may be -84 dBm, or may be another value. In other words, the AS of the first terminal device detects a cell with strong signal strength within the fullband range.

Step 4: The AS determines, as a target cell, a cell whose corresponding cell identifier is the same as the identifier of the cell allowing the target network slice and that is in the cell whose received signal power is greater than or equal to the second threshold. For example, cells whose received signal power is greater than or equal to the second threshold include a cell 1, a cell 2, a cell 3, and a cell 4, and cells allowing the target network slice within the first area range include the cell 2, the cell 4, and a cell 6. In this case, the cell 2 and the cell 4 may be determined as target cells.

Optionally, if the network slice information sent by the first core network device includes only the allowed network slices of the different radio access network devices within the first area range, the AS may determine, as the target cell, a cell whose radio access network device identifier included in a corresponding cell identifier is the same as the identifier of the radio access network device allowing the target network slice and that is in the cell whose received signal power is greater than or equal to the second threshold.

Step 5: The AS sends information about supported PLMNs of the target cell to the NAS, where the PLMN information may be information about supported PLMNs of one target cell or a set of information about supported PLMNs of a plurality of target cells.

Step 6: The NAS determines a PLMN with a highest priority as the first PLMN based on the information about the supported PLMNs of the target cell. Optionally, the NAS may alternatively determine the first PLMN from a plurality of PLMNs based on a historical usage status.

It should be understood that allowed network slices of a same radio access network device or a same cell in different PLMNs may be different. The supported PLMNs of the target cell that are reported by the AS may be all supported PLMNs of the target cell. Therefore, in step 6, the NAS may further screen the supported PLMNs of the target cell that are reported by the AS, obtain, through screening, PLMNs allowing the network slice, and then determine, from the PLMNs obtained through screening, a PLMN with a highest priority as the first PLMN.

270: The first terminal device determines a first cell based on the first PLMN and the target network slice. The first cell is a cell that is finally determined by the first terminal device to request to access.

The first terminal device uses the information about the allowed network slices of the different radio access network devices or the different cells as prior information, to perform cell selection. The specific implementation mode may include:

### Implementation 1:

Step 1: The AS of the first terminal device detects, in the determined first PLMN, the cell whose received signal power is greater than or equal to the second threshold, that is, detects the cell with strong signal strength, where the second threshold may be -84 dBm.

Step 2: The AS detects, from the cell whose received signal power is greater than or equal to the second threshold, a cell whose received signal power is greater than a first threshold. A cell whose received signal power is greater than the first threshold is a cell that satisfies an S criterion. The S criterion is:
Srxlev>0; and Srxlev=Qrxlevmeas-(Qrxlevmin+Qrxlevminoffset)-Pcompensation, where
Qrxlevmeas is a reference signal received power RSRP of a candidate cell; both Qrxlevmin and Qrxlevminoffset are minimum receive levels for camping on a cell that are configured in a system information block (system information block, SIB), and Qrxlevminoffset is used only when UE camps on a visited public land mobile network (visited Public Land Mobile Network, VPLMN) cell; and Pcompensation is a maximum value between 0 and a value obtained by subtracting maximum radio frequency output power PUMAX of the UE from maximum transmit power PEMAX that can be used by the UE in an uplink, that is, MAX(PEMAX-PUMAX, 0).

Step 3: The AS sends, to the NAS of the first terminal device, the cell identifier corresponding to the cell whose received signal power is greater than the first threshold.

Step 4: The NAS determines, based on the network slice information sent by the first core network device, the identifier of the radio access network device or the cell that allows the target network slice. If the network slice information sent by the first core network device includes only the allowed network slices of the different radio access network devices within the first area range, the NAS can determine only the identifier of the radio access network device allowing the target network slice. If the network slice information sent by the first core network device includes the allowed network slices of the different cells within the first area range, the NAS can determine the identifier of the cell allowing the target network slice.

Step 5: The NAS determines, as the first cell, a cell whose corresponding cell identifier is the same as the identifier of the cell allowing the target network slice and that is in the cell whose received signal power is greater than the first threshold.

Optionally, if the network slice information sent by the first core network device includes only the allowed network slices of the different radio access network devices within the first area range, the NAS may determine, as the first cell, a cell whose radio access network device identifier included in a corresponding cell identifier is the same as the identifier of the radio access network device allowing the target network slice and that is in the cell whose received signal power is greater than the first threshold.

There may be one or more first cells. When there are a plurality of first cells, the first terminal device may access any one of the first cells.

### Implementation 2:

Step 1: The NAS of the first terminal device sends, to the AS of the first terminal device, the identifier of the radio access network device or the cell that allows the target network slice.

Step 2: The AS detects, in a cell that is in cells covered by the first PLMN and whose cell identifier is the same as the identifier of the cell allowing the target network slice, a cell whose received signal power is greater than a first threshold. Alternatively, the AS detects, in a cell that is in cells covered by the first PLMN and whose radio access network device identifier included in a cell identifier is the same as the identifier of the radio access network device allowing the target network slice, a cell whose received signal power is greater than a first threshold, where the cell whose received signal power is greater than the first threshold is a cell that satisfies an S criterion.

Step 3: The AS sends, to the NAS, an identifier of the cell whose received signal power is greater than the first threshold.

Step 4: The NAS determines the first cell from the cell whose received signal power is greater than the first threshold.

Based on the foregoing technical solutions, the first terminal device determines the target network slice based on the allowed or supported network slices that are of different radio access network devices or different cells controlled by a radio access network device and that are sent by the first core network device, determines the first PLMN based on information about the target network slice, and then determines, based on the first PLMN and the target network slice, the cell to request to access. This can avoid a case in which the cell that the first terminal device requests to access does not allow the target network slice of the first terminal device, so that user experience is improved.

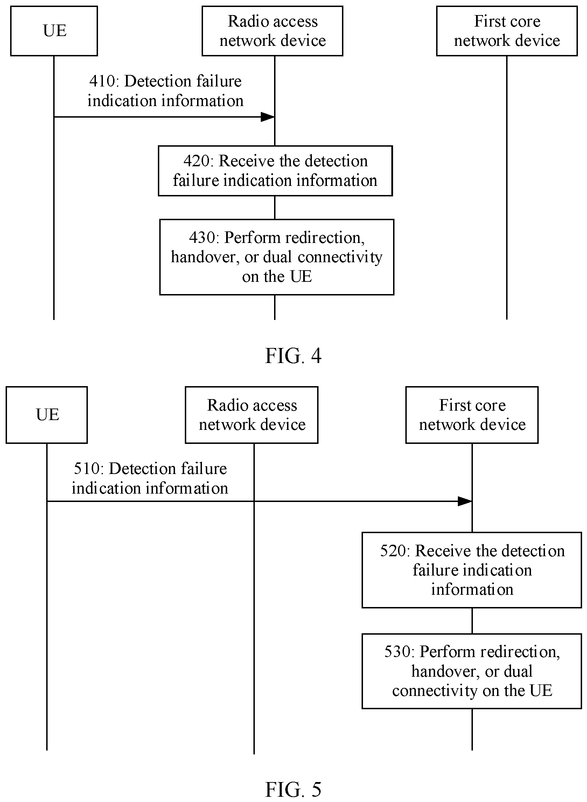

Optionally, if the first terminal device does not find, after several attempts based on the network slice information, a cell allowing the target network slice of the first terminal device, the first terminal device may send a detection failure indication to the radio access network device or the first core network device, and then the radio access network device or the first core network device performs a redirection, handover, or dual connectivity operation on the first terminal device, so that the first terminal device accesses the cell allowing the target network slice of the first terminal device. It should be understood that the radio access network device may be a radio access network device that allows the target network slice, or may be another radio access network device. FIG. 4 is an interaction flowchart of another cell selection method 400 according to an embodiment of this application. A specific process includes the following steps.

410: A first terminal device sends detection failure indication information to a radio access network device. Optionally, the detection failure indication information may include identification information of a target network slice selected by the first terminal device, to indicate that the target network slice is not supported by a network.

420: The radio access network device receives the detection failure indication information.

430: The radio access network device performs a redirection, handover, or dual connectivity operation on the first terminal device.

FIG. 5 is an interaction flowchart of another cell selection method 500 according to an embodiment of this application. A specific process includes the following steps.

510: A first terminal device sends detection failure indication information to a first core network device. Optionally, the detection failure indication information may include identification information of a target network slice selected by the first terminal device, to indicate that the target network slice is not supported by a network. It should be understood that the first terminal device may alternatively send the failure indication information to another core network device.

520: The first core network device receives the detection failure indication information.

530: The first core network device may perform a redirection, handover, or dual connectivity operation on the first terminal device, or the first core network device may indicate a radio access network device currently accessed by the UE to perform redirection, handover, or dual connectivity on the first terminal device.

In the technical solution of this application, the radio access network device may send, to the first core network device, information about a supported frequency of the radio access network device and supported network slices on different frequencies. It should be understood that the radio access network device may also send, to the first core network device, information about supported frequencies of different cells controlled by the radio access network device and supported network slices of the different cells on different frequencies.

Therefore, network slice information sent by the first core network device to the first terminal device may include information about supported frequencies of different radio access network devices and allowed or supported network slices on different frequencies within a first area range.

After determining the target network slice based on the network slice information sent by the first core network device, the first terminal device determines a first PLMN based on the target network slice. Optionally, a specific implementation may further include the following steps.

Step 1: An AS of the first terminal device detects, within a fullband range, a cell whose received signal power is greater than or equal to a second threshold, where the second threshold may be -84 dBm. In other words, the AS of the first terminal device detects a cell with strong signal strength within the fullband range.

Step 2: The AS of the first terminal device sends a cell identifier corresponding to the cell whose received signal power is greater than or equal to the second threshold, a supported frequency of the cell, and supported PLMNs of the cell to a NAS of the first terminal device.

Step 3: The NAS determines, based on the network slice information sent by the first core network device, an identifier of a radio access network device allowing the target network slice and a corresponding frequency.

Step 4: The NAS determines, as a target cell, a cell whose radio access network device identifier included in a corresponding cell identifier is the same as the identifier of the radio access network device allowing the target network slice, whose supported frequency is the same as the frequency corresponding to the radio access network device allowing the target network slice, and that is in the cell whose received signal power is greater than or equal to the second threshold.

Step 5: The NAS determines a PLMN with a highest priority as the first PLMN based on information about supported PLMNs of the selected target cell. One target cell may support a plurality of PLMNs, and the supported PLMNs have a priority sequence. If there are a plurality of target cells, a PLMN with a highest priority among a plurality of supported PLMNs of the plurality of target cells may be determined as the first PLMN. Optionally, the NAS may alternatively determine the first PLMN based on a historical usage status, where the first PLMN may not have the highest priority among the plurality of supported PLMNs of the target cell.

It should be understood that allowed network slices of a same radio access network device or a same cell in different PLMNs may be different. Therefore, in step 5, the NAS may further screen the supported PLMNs of the target cell, obtain, through screening, PLMNs allowing the network slice, and then determine, from the PLMNs obtained through screening, a PLMN with a highest priority as the first PLMN.

Optionally, a specific implementation may alternatively include the following steps.

Step 1: A non-access stratum NAS of the first terminal device determines, based on the network slice information sent by the first core network device, an identifier of a radio access network device allowing the target network slice and a supported frequency of the radio access network device.

Step 2: The NAS sends the identifier of the radio access network device allowing the target network slice and information about the supported frequency of the radio access network device to an AS of the first terminal device.

Step 3: The AS detects, frequency by frequency based on the information about the supported frequency of the radio access network device allowing the target network slice, a cell whose received signal power is greater than or equal to a second threshold, where the second threshold may be -84 dBm. In this implementation, the AS can be prevented from detecting, within a fullband range, the cell whose received signal power is greater than or equal to the second threshold, and only needs to detect, on the supported frequency of the radio access network device allowing the target network slice, the cell whose received signal power is greater than or equal to the second threshold.

Step 4: The AS determines, as a target cell, a cell whose radio access network device identifier included in a corresponding cell identifier is the same as the identifier of the radio access network device allowing the target network slice and that is in the cell whose received signal power is greater than or equal to the second threshold.

Step 5: The AS sends information about supported PLMNs of the target cell to the NAS, where the PLMN information may be information about supported PLMNs of one target cell or a set of information about supported PLMNs of a plurality of target cells.

Step 6: The NAS determines a PLMN with a highest priority as the first PLMN based on the information about the supported PLMNs of the target cell. Optionally, the NAS may alternatively determine the first PLMN from a plurality of PLMNs based on a historical usage status.

It should be understood that allowed network slices of a same radio access network device or a same cell in different PLMNs may be different. The supported PLMNs of the target cell that are reported by the AS may be all supported PLMNs of the target cell. Therefore, in step 6, the NAS may further screen the supported PLMNs of the target cell that are reported by the AS, obtain, through screening, PLMNs allowing the network slice, and then determine, from the PLMNs obtained through screening, a PLMN with a highest priority as the first PLMN.

After determining the first PLMN, the first terminal device determines the first cell based on the first PLMN and the target network slice. The first cell is a cell that is finally determined by the first terminal device to request to access. Optionally, a specific implementation may further include the following steps.

Step 1: The AS of the first terminal device detects, in the determined first PLMN, the cell whose received signal power is greater than or equal to the second threshold, that is, detects the cell with strong signal strength, where the second threshold may be -84 dBm.

Step 2: The AS detects, from the cell whose received signal power is greater than or equal to the second threshold, a cell whose received signal power is greater than a first threshold, where the cell whose received signal power is greater than the first threshold is a cell meeting an S criterion.

Step 3: The AS sends, to the NAS of the first terminal device, a cell identifier corresponding to the cell whose received signal power is greater than the first threshold and a supported frequency of the cell.

Step 4: The NAS determines, based on the network slice information sent by the first core network device, the identifier of the radio access network device allowing the target network slice and the corresponding frequency.

Step 5: The NAS determines, as the first cell, a cell whose radio access network device identifier included in a corresponding cell identifier is the same as the identifier of the radio access network device allowing the target network slice, whose supported frequency is the same as the frequency corresponding to the radio access network device allowing the target network slice, and that is in the cell whose received signal power is greater than the first threshold. There may be one or more first cells. When there are a plurality of first cells, the first terminal device may access any one of the first cells.

Optionally, a specific implementation may alternatively include the following steps.

Step 1: The NAS of the first terminal device sends, to the AS of the first terminal device, the identifier of the radio access network device allowing the target network slice and the supported frequency of the radio access network device.

Step 2: The AS detects, frequency by frequency based on the information about the supported frequency of the radio access network device allowing the target network slice, a cell whose received signal power is greater than a first threshold and that is in cells covered by the first PLMN.

Step 3: The AS determines, as the target cell, a cell whose radio access network device identifier included in a corresponding cell identifier is the same as the identifier of the radio access network device allowing the target network slice and that is in the cell whose received signal power is greater than the first threshold, and sends an identifier of the target cell to the NAS.

Step 4: The NAS determines the first cell from the target cell whose received signal power is greater than the first threshold.

Specifically, a same cell may support one or more frequencies, and allowed network slices of cells on different frequencies are different. The NAS may determine, based on information about allowed network slices on supported different frequencies of the target cell, that a frequency allowing the target network slice is a camping frequency. Optionally, if the first terminal device does not find, after several attempts based on the network slice information, a cell allowing the target network slice of the first terminal device, the first terminal device may send a detection failure indication to the radio access network device or the first core network device, and then the radio access network device or the first core network device performs the redirection, handover, or dual connectivity operation on the first terminal device, so that the first terminal device accesses the cell allowing the target network slice of the first terminal device.

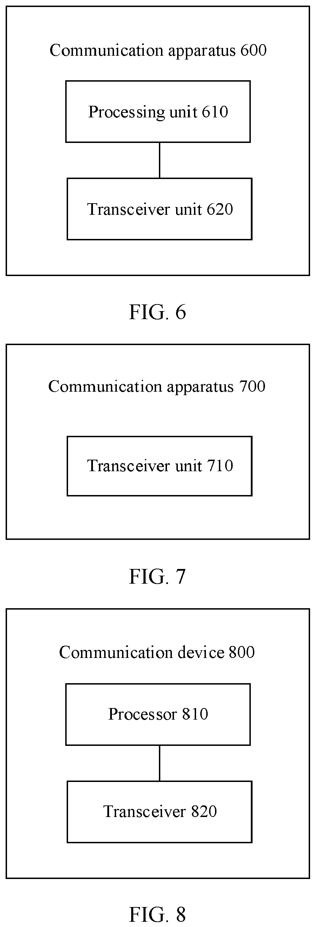

An embodiment of this application provides a communication apparatus 600. FIG. 6 is a schematic block diagram of the communication apparatus 600 according to an embodiment of this application. The communication apparatus 600 includes:
a processing unit 610, configured to determine a target network slice, where
the processing unit 610 is further configured to determine a first public land mobile network PLMN based on the target network slice; and
the processing unit 610 is further configured to determine a first cell based on the first PLMN and the target network slice, where received signal power of the first cell is greater than a first threshold.

Optionally, the apparatus further includes a transceiver unit 620, configured to receive network slice information sent by a first core network device, where the network slice information includes allowed or supported network slices of different radio access network devices or different cells within a first area range.

The processing unit 610 is specifically configured to determine the target network slice based on the network slice information, where the target network slice is a network slice in the allowed network slices of the different radio access network devices or the different cells within the first area range.

Optionally, in an implementation, the processing unit 610 is specifically configured to:
detect, within a fullband range, a cell whose received signal power is greater than or equal to a second threshold;
determine a cell identifier corresponding to the cell whose received signal power is greater than or equal to the second threshold and information about supported PLMNs;
determine, based on the network slice information, an identifier of a radio access network device or a cell that allows the target network slice; and
determine, as a target cell, a cell whose corresponding cell identifier is the same as the identifier of the cell allowing the target network slice and that is in the cell whose received signal power is greater than or equal to the second threshold, or determine, as a target cell, a cell whose radio access network device identifier included in a corresponding cell identifier is the same as the identifier of the radio access network device allowing the target network slice and that is in the cell whose received signal power is greater than or equal to the second threshold;
determine a PLMN with a highest priority as the first PLMN based on information about supported PLMNs of the target cell.

Optionally, in another implementation, the processing unit 610 is specifically configured to:
determine, based on the network slice information, an identifier of a radio access network device or a cell that allows the target network slice;
detect, within a fullband range, a cell whose received signal power is greater than or equal to a second threshold;
determine, as a target cell, a cell whose corresponding cell identifier is the same as the identifier of the cell allowing the target network slice and that is in the cell whose received signal power is greater than or equal to the second threshold, or determine, as a target cell, a cell whose radio access network device identifier included in a corresponding cell identifier is the same as the identifier of the radio access network device allowing the target network slice and that is in the cell whose received signal power is greater than or equal to the second threshold;
determine information about supported PLMNs of the target cell; and
determine a PLMN with a highest priority as the first PLMN based on the PLMN information.

Optionally, in an implementation, the processing unit 610 is specifically configured to:
detect, from all cells covered by the first PLMN, the cell whose received signal power is greater than or equal to the second threshold;
detect, from the cell whose received signal power is greater than or equal to the second threshold, a cell whose received signal power is greater than a first threshold;
determine a cell identifier corresponding to the cell whose received signal power is greater than the first threshold;
determine, based on the network slice information, the identifier of the radio access network device or the cell that allows the target network slice; and
determine, as the first cell, a cell whose corresponding cell identifier is the same as the identifier of the cell allowing the target network slice and that is in the cell whose received signal power is greater than the first threshold, or determine, as the first cell, a cell whose radio access network device identifier included in a corresponding cell identifier is the same as the identifier of the radio access network device allowing the target network slice and that is in the cell whose received signal power is greater than the first threshold.

Optionally, in another implementation, the processing unit 610 is specifically configured to:
determine, based on the network slice information, the identifier of the radio access network device or the cell that allows the target network slice;
detect, in a cell that is in cells covered by the first PLMN and whose cell identifier is the same as the identifier of the cell allowing the target network slice, a cell whose received signal power is greater than a first threshold, or detect, in a cell that is in cells covered by the first PLMN and whose radio access network device identifier included in a cell identifier is the same as the identifier of the radio access network device allowing the target network slice, a cell whose received signal power is greater than a first threshold; and
determine the first cell from the cell whose received signal power is greater than the first threshold.

Optionally, the first area range is an area range of at least one tracking area TA or an area range of at least one registration area RA.

An embodiment of this application provides a communication apparatus 700. FIG. 7 is a schematic block diagram of another communication apparatus 700 according to an embodiment of this application. The communication apparatus 700 includes:
a transceiver unit 710, configured to send network slice information to a first terminal device, where the network slice information includes allowed or supported network slices of different radio access network devices or different cells within a first area range.

Optionally, before sending the network slice information to the first terminal device, the transceiver unit 710 is further configured to receive a supported network slice of a radio access network device sent by the radio access network device or supported network slices that are of different cells controlled by the radio access network device and that are sent by the radio access network device, where the radio access network device is a network device within the first area range.

Optionally, the first area range is an area range of at least one tracking area TA or an area range of at least one registration area RA.

An embodiment of this application provides a communication device 800. FIG. 8 is a schematic block diagram of the communication device 800 according to an embodiment of this application. The communication apparatus 800 includes:
a processor 810 and a transceiver 820, where the transceiver 820 is configured to: receive computer code or instructions, and transmit the computer code or the instructions to the processor, and the processor 810 runs the computer code or the instructions, to implement the method in embodiments of this application.

The foregoing processor 820 may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and the logical block diagrams disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The foregoing memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be understood that the memory may be integrated into the processor, the processor and the memory may be integrated into a same chip, or the processor and the memory may be separately located on different chips and connected in an interface coupling manner. This is not limited in embodiments of this application.

An embodiment of this application further provides a computer-readable storage medium. The computer-readable storage medium stores a computer program used to implement the methods in the foregoing method embodiments. When the computer program is run on a computer, the computer is enabled to implement the methods in the foregoing method embodiments.

In addition, the term "and/or" in this application merely indicates an association relationship for describing associated objects, and indicates that three relationships may exist. For example, A and/or B may indicate the following three cases: Only A exists, both A and B exist, and only B exists. In addition, the character "/" in this specification generally indicates that the associated objects are in an "or" relationship. In this application, the term "at least one" may represent "one" and "two or more". For example, at least one of A, B, and C may represent the following seven cases: Only A exists, only B exists, only C exists, both A and B exist, both A and C exist, both C and B exist, A, B, and C all exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but such implementation should not be considered beyond the scope of this application.

A person skilled in the art may clearly learn that, for the purpose of convenient and brief description, for a specific working process of the foregoing system, apparatuses, and units, refer to a corresponding process in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell selection method, comprising:
determining, by a first terminal device, a target network slice;
determining, by the first terminal device, a first public land mobile network PLMN based on the target network slice; and
determining, by the first terminal device, a first cell based on the first PLMN and the target network slice.

2. The method according to claim 1, wherein the determining, by a first terminal device, a target network slice comprises:
receiving, by the first terminal device, network slice information sent by a first core network device, wherein the network slice information comprises allowed or supported network slices of different radio access network devices or different cells within a first area range; and
determining, by the first terminal device, the target network slice based on the network slice information, wherein the target network slice is a network slice in the allowed network slices of the different radio access network devices or the different cells within the first area range.

3. The method according to claim 1 or 2, wherein the determining, by the first terminal device, a first public land mobile network PLMN based on the target network slice comprises:
detecting, by an access stratum AS of the first terminal device within a fullband range, a cell whose received signal power is greater than or equal to a second threshold;
sending, by the AS, a cell identifier corresponding to the cell whose received signal power is greater than or equal to the second threshold and information about supported PLMNs to a non-access stratum NAS of the first terminal device;
determining, by the NAS based on the network slice information, an identifier of a radio access network device or a cell that allows the target network slice;
determining, by the NAS as a target cell, a cell whose corresponding cell identifier is the same as the identifier of the cell allowing the target network slice and that is in the cell whose received signal power is greater than or equal to the second threshold, or determining, by the NAS as a target cell, a cell whose radio access network device identifier comprised in a corresponding cell identifier is the same as the identifier of the radio access network device allowing the target network slice and that is in the cell whose received signal power is greater than or equal to the second threshold; and
determining, by the NAS, a PLMN with a highest priority as the first PLMN based on information about supported PLMNs of the target cell.

4. The method according to claim 1 or 2, wherein the determining, by the first terminal device, a first public land mobile network PLMN based on the target network slice comprises:
determining, by a non-access stratum NAS of the first terminal device based on the network slice information, an identifier of a radio access network device or a cell that allows the target network slice;
sending, by the NAS to an access stratum AS of the first terminal device, the identifier of the radio access network device or the cell that allows the target network slice;
detecting, by the AS within a fullband range, a cell whose received signal power is greater than or equal to a second threshold;
determining, by the AS as a target cell, a cell whose corresponding cell identifier is the same as the identifier of the cell allowing the target network slice and that is in the cell whose received signal power is greater than or equal to the second threshold, or determining, by the AS as a target cell, a cell whose radio access network device identifier comprised in a corresponding cell identifier is the same as the identifier of the radio access network device allowing the target network slice and that is in the cell whose received signal power is greater than or equal to the second threshold;
sending, by the AS, information about supported PLMNs of the target cell to the NAS; and
determining, by the NAS, a PLMN with a highest priority as the first PLMN based on the PLMN information.

5. The method according to claim 3 or 4, wherein the determining, by the first terminal device, a first cell based on the first PLMN and the target network slice comprises:
detecting, by the AS from all cells covered by the first PLMN, the cell whose received signal power is greater than or equal to the second threshold;
detecting, by the AS from the cell whose received signal power is greater than or equal to the second threshold, a cell whose received signal power is greater than a first threshold;
sending, by the AS to the NAS, a cell identifier corresponding to the cell whose received signal power is greater than the first threshold;
determining, by the NAS based on the network slice information, the identifier of the radio access network device or the cell that allows the target network slice; and
determining, by the NAS as the first cell, a cell whose corresponding cell identifier is the same as the identifier of the cell allowing the target network slice and that is in the cell whose received signal power is greater than the first threshold, or determining, by the NAS as the first cell, a cell whose radio access network device identifier comprised in a corresponding cell identifier is the same as the identifier of the radio access network device allowing the target network slice and that is in the cell whose received signal power is greater than the first threshold.

6. The method according to claim 3 or 4, wherein the determining, by the first terminal device, a first cell based on the first PLMN and the target network slice comprises:
sending, by the NAS to the AS, the identifier of the radio access network device or the cell that allows the target network slice;
detecting, by the AS in a cell that is in cells covered by the first PLMN and whose cell identifier is the same as the identifier of the cell allowing the target network slice, a cell whose received signal power is greater than a first threshold, or detecting, by the AS in a cell that is in cells covered by the first PLMN and whose radio access network device identifier comprised in a cell identifier is the same as the identifier of the radio access network device allowing the target network slice, a cell whose received signal power is greater than a first threshold;
sending, by the AS to the NAS, an identifier of the cell whose received signal power is greater than the first threshold; and
determining, by the NAS, the first cell from the cell whose received signal power is greater than the first threshold.

7. The method according to any one of claims 2 to 6, wherein the first area range is an area range of at least one tracking area TA or an area range of at least one registration area RA.

8. A cell selection method, comprising:
sending, by a first core network device, network slice information to a first terminal device, wherein the network slice information comprises allowed or supported network slices of different radio access network devices or different cells within a first area range.

9. The method according to claim 8, wherein before the sending, by a first core network device, network slice information to a first terminal device, the method further comprises:
receiving, by the first core network device, a supported network slice of a radio access network device sent by the radio access network device or supported network slices that are of different cells controlled by the radio access network device and that are sent by the radio access network device, wherein the radio access network device is a network device within the first area range.

10. The method according to claim 8 or 9, wherein the first area range is an area range of at least one tracking area TA or an area range of at least one registration area RA.

11. A communication apparatus, comprising:
a processing unit, configured to determine a target network slice, wherein
the processing unit is further configured to determine a first public land mobile network PLMN based on the target network slice; and
the processing unit is further configured to determine a first cell based on the first PLMN and the target network slice.

12. The communication apparatus according to claim 11, wherein the apparatus further comprises a transceiver unit, configured to receive network slice information sent by a first core network device, wherein the network slice information comprises allowed or supported network slices of different radio access network devices or different cells within a first area range; and
the processing unit is specifically configured to determine the target network slice based on the network slice information, wherein the target network slice is a network slice in the allowed network slices of the different radio access network devices or the different cells within the first area range.

13. The communication apparatus according to claim 11 or 12, wherein the processing unit is specifically configured to:
detect, within a fullband range, a cell whose received signal power is greater than or equal to a second threshold;
determine a cell identifier corresponding to the cell whose received signal power is greater than or equal to the second threshold and information about supported PLMNs;
determine, based on the network slice information, an identifier of a radio access network device or a cell that allows the target network slice;
determine, as a target cell, a cell whose corresponding cell identifier is the same as the identifier of the cell allowing the target network slice and that is in the cell whose received signal power is greater than or equal to the second threshold, or determine, as a target cell, a cell whose radio access network device identifier comprised in a corresponding cell identifier is the same as the identifier of the radio access network device allowing the target network slice and that is in the cell whose received signal power is greater than or equal to the second threshold; and
determine a PLMN with a highest priority as the first PLMN based on information about supported PLMNs of the target cell.

14. The communication apparatus according to claim 11 or 12, wherein the processing unit is specifically configured to:
determine, based on the network slice information, an identifier of a radio access network device or a cell that allows the target network slice;
detect, within a fullband range, a cell whose received signal power is greater than or equal to a second threshold;
determine, as a target cell, a cell whose corresponding cell identifier is the same as the identifier of the cell allowing the target network slice and that is in the cell whose received signal power is greater than or equal to the second threshold, or determine, as a target cell, a cell whose radio access network device identifier comprised in a corresponding cell identifier is the same as the identifier of the radio access network device allowing the target network slice and that is in the cell whose received signal power is greater than or equal to the second threshold;
determine information about supported PLMNs of the target cell; and
determine a PLMN with a highest priority as the first PLMN based on the PLMN information.

15. The communication apparatus according to claim 13 or 14, wherein the processing unit is specifically configured to:
detect, from all cells covered by the first PLMN, the cell whose received signal power is greater than or equal to the second threshold;
detect, from the cell whose received signal power is greater than or equal to the second threshold, a cell whose received signal power is greater than a first threshold;
determine a cell identifier corresponding to the cell whose received signal power is greater than the first threshold;
determine, based on the network slice information, the identifier of the radio access network device or the cell that allows the target network slice; and
determine, as the first cell, a cell whose corresponding cell identifier is the same as the identifier of the cell allowing the target network slice and that is in the cell whose received signal power is greater than the first threshold, or determine, as the first cell, a cell whose radio access network device identifier comprised in a corresponding cell identifier is the same as the identifier of the radio access network device allowing the target network slice and that is in the cell whose received signal power is greater than the first threshold.

16. The communication apparatus according to claim 13 or 14, wherein the processing unit is specifically configured to:
determine the identifier of the radio access network device or the cell that allows the target network slice;
detect, in a cell that is in cells covered by the first PLMN and whose cell identifier is the same as the identifier of the cell allowing the target network slice, a cell whose received signal power is greater than a first threshold, or detect, in a cell that is in cells covered by the first PLMN and whose radio access network device identifier comprised in a cell identifier is the same as the identifier of the radio access network device allowing the target network slice, a cell whose received signal power is greater than a first threshold; and
determine the first cell from the cell that meets a first preset condition.

17. The method according to any one of claims 12 to 16, wherein the first area range is an area range of at least one tracking area TA or an area range of at least one registration area RA.

18. A communication apparatus, comprising:
a transceiver unit, configured to send network slice information to a first terminal device, wherein the network slice information comprises allowed or supported network slices of different radio access network devices or different cells within a first area range.

19. The communication apparatus according to claim 18, wherein before sending the network slice information to the first terminal device, the transceiver unit is further configured to:
receive a supported network slice of a radio access network device sent by the radio access network device or supported network slices that are of different cells controlled by the radio access network device and that are sent by the radio access network device, wherein the radio access network device is a network device within the first area range.

20. The communication apparatus according to claim 18 or 19, wherein the first area range is an area range of at least one tracking area TA or an area range of at least one registration area RA.

21. A communication device, comprising a processor and a transceiver, wherein the transceiver is configured to: receive computer code or instructions, and transmit the computer code or the instructions to the processor, and the processor runs the computer code or the instructions, to implement the method according to any one of claims 1 to 7.

22. A communication device, comprising a processor and a transceiver, wherein the transceiver is configured to:
receive computer code or instructions, and transmit the computer code or the instructions to the processor, and the processor runs the computer code or the instructions, to implement the method according to any one of claims 8 to 10.

23. A computer-readable storage medium, wherein
the computer-readable medium stores a computer program; and
when the computer program is run on a computer, the computer is enabled to perform the method according to any one of claims 1 to 7.

24. A computer-readable storage medium, wherein
the computer-readable medium stores a computer program; and
when the computer program is run on a computer, the computer is enabled to perform the method according to any one of claims 8 to 10.
